# EUROPÄISCHE PATENTSCHRIFT

(11) **EP 1 784 313 B1**
(45) Veröffentlichungstag und Bekanntmachung des Hinweises auf die Patenterteilung: **11.01.2012**
(21) Anmeldenummer: 05769796.3
(22) Anmeldetag: 28.07.2005
(51) Int. Cl.: B60J 7/20

(54) **CABRIOLET-FAHRZEUG MIT EINEM AN SEITLICHEN DACHGESTÄNGETEILEN GEHALTENEN DACH**
CABRIOLET VEHICLE COMPRISING A ROOF HELD ON LATERAL ROOF LINKAGE PARTS
VEHICULE DE TYPE CABRIOLET A TOIT MAINTENU SUR DES ELEMENTS DE TRINGLERIE DE TOIT LATERAUX

(30) Priorität: 27.08.2004 DE 102004041539
(43) Veröffentlichungstag der Anmeldung: 16.05.2007
(73) Patentinhaber: Wilhelm Karmann GmbH, 49084 Osnabrück (DE)
(72) Erfinder: WEISSMÜLLER, Olaf, 49565 Bramsche (DE); RUSSKE, Klaus, 49143 Bissendorf (DE)
(74) Vertreter: Kronthaler, Schmidt & Coll.
(86) Internationale Anmeldenummer: PCT/DE2005/001326
(87) Internationale Veröffentlichungsnummer: WO 2006/021177

(56) Entgegenhaltungen:
- EP-A- 0 502 295
- EP-A- 1 288 046
- EP-A- 1 449 698
- DE-A1- 10 252 987
- DE-U1- 29 921 497
- US-B1- 6 644 715

## Beschreibung

Die Erfindung betrifft ein Cabriolet-Fahrzeug mit einem im hinteren Fahrzeugbereich ablegbaren Dach nach dem Oberbegriff des Anspruchs 1.

Das im offenen Zustand des Fahrzeugs abgelegte Dach ist während der Fahrt, insbesondere beim Überfahren von Fahrbahnunebenheiten, der Gefahr ausgesetzt, daß es in Bewegung gerät und eventuell gegen überdeckende Deckelteile anschlägt oder zumindest Teile des Daches gegeneinander scheuern und dadurch schnell verschleißen.

Um das abgelegte Dach gegen solche Bewegungen und auch gegen ein unkontrolliertes Auffalten bei einem eventuellen Unfall, insbesondere Überschlag, zu sichern, ist es bekannt, Niederhalter zur Lagesicherung des in der Karosserie abgelegten Daches vorzusehen. Beispielsweise können diese einem Verdeckkastendeckel, der das abgelegte Dach übergreift, zugeordnet sein. Derartige Niederhalter drücken jedoch häufig auf den Bezugsstoff auf, was wiederum verschleißfördernd ist. Zudem ist es oft erwünscht, im Zuge einer Vereinfachung und Gewichtsersparnis und einer Optimierung des Kofferraumvolumens auf einen solchen Verdeckkastendeckel zu verzichten, insbesondere dann, wenn das Dach selbst mit seinem bei geschlossenem Dach an den Windschutzscheibenrahmen anschließenden vorderen Bereich im abgelegten Zustand ungewendet verbleibt und die Eintrittsöffnung im wesentlichen ausfüllt.

Die EP 0 502 295 A zeigt ein solches Fahrzeug, dessen Fahrzeugdach im geöffneten Zustand von Niederhaltern heruntergedrückt wird, wobei die Niederhalter einem Verdeckkastendeckel unterseitig zugeordnet sind und dadurch die vorgenannten Nachteile bei ihrer Einwirkung auf das Fahrzeugdach zeigen.

Der Erfindung liegt das Problem zugrunde, bei einem gattungsgemäßen Cabriolet-Fahrzeug eine möglichst vorteilhafte Sicherung des geöffneten Daches zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 9 angegeben.

Durch die erfindungsgemäße Ausbildung eines Cabriolet-Fahrzeugs ist oder sind ein oder mehrere Niederhalter für das Dach unabhängig vom Vorhandensein eines Verdeckkastendeckels ausgebildet. Zudem ist durch die Einwirkung auf seitliche Dachgestängeteile des abgelegten Daches ein verschleißender Kontakt zwischen dem Niederhalter einerseits und dem Dachbezug bzw. einer lackierten Fläche eines festen Dachteils andererseits verhindert. Die Anlagefläche des Niederhalters an dem Dachgestängeteil muß bei geschlossenem Dach nicht sichtbar sein. Durch die Querauswärtsbewegungskomponente des Niederhalters ist ein langer reibender Kontakt zu dem Dach während des Aufdrückens des Niederhalters vermieden. Der zumindest eine Niederhalter kann so passend quer auswärts bewegt werden, daß er sich verschleißminimierend über das Gestängeteil legt.

Ohne großen Aufwand können pro Fahrzeugseite mehrere Niederhalter realisiert sein, was eine besonders gute Dachsicherung bewirken kann.

Wenn der oder jeder Niederhalter ein auf die Dachgestängeteile von oben aufschwenkbares Druckstück umfaßt, kann dieses während des Dachdurchtritts durch die Eintrittsöffnung eingeschwenkt sein, ohne die Eintrittsöffnung einzuschränken. Der Druck wirkt dennoch im ausgeschwenkten Zustand nach unten und sichert das Dach gegen Aufwärtsbewegungen. Das Druckstück kann vorteilhaft derart abgewinkelt sein, daß es das Dachgestänge zumindest teilweise umgreift und dieses daher auch gegen seitliche Bewegung sichert.

Eine besondere Einsparung an bewegten Teilen und damit auch eine Gewichtsersparnis ergibt sich, wenn das Gestänge in Doppelfunktion ein Verkleidungsteil zum Abdecken oder Freigeben eines Teils einer Eintrittsöffnung des Daches in die Karosserie beweglich hält. Hierfür ist dann kein separates Gestänge erforderlich.

Besonders günstig kann das Gestänge an einer den Insassenraum begrenzenden Rückwand flach anliegend derart gehalten ist, daß es das Verkleidungsteil in freigebender Stellung in einer gegenüber seiner abdeckenden Stellung zumindest teilweise in Richtung einer vertikalen Fahrzeuglängsmittelebene verlagerten, hochkant gestellten und quer zum Fahrzeug erstreckten Lage unterhalb der Ebene der Eintrittsöffnung hält, wobei es aus dieser Stellung in eine hochkant gestellte Zwischenstellung auswärts verschwenkbar ist. Damit ist eine Optimierung des Kofferraums bei gleichzeitig maximal zur Verfügung gestelltem Bewegungsraum für das Dach erreicht.

Sofern die Verkleidungsteile in freigebender Stellung aus einer hochkant gestellten Zwischenstellung einwärts verschwenkt sind, können insbesondere die Verkleidungsteile dann bei abgelegtem Dach ausgeschwenkt werden, ohne mit der Dachspitze zu kollidieren, selbst wenn die Dachspitze bis dicht an die zunächst noch in Freigabestellung liegenden Verkleidungsteile heranreicht. Dies erlaubt eine sehr günstige, weit nach vorne gerückte Ablageposition für das Dach. Falls bei geöffnetem Dach das vordere, bei geschlossenem Dach mit einem windschutzscheibenrahmen verbundene Dachende in gleichbleibender Orientierung abgelegt ist und seine bei geschlossenem Dach nach oben weisende Seite eine optische Abschlußfläche für einen wesentlichen Teil des mittleren Bereichs der Eintrittsöffnung ausbildet, fällt dieses Dachende zu seinen Querseiten hin bei üblicher Fahrzeuggestaltung ab, so daß gerade in diesen Randbereichen die Verwendung von Verkleidungsteilen mit den erfindungsgemäßen Niederhaltern optisch und mechanisch gut zu verwirklichen ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische, perspektivische und zum Fahrzeugbug und -heck abgebrochene Ansicht des hinteren Fahrzeugbereichs eines erfindungsgemäßen Cabriolet-Fahrzeugs bei in der Karosserie abgelegtem Dach und mit einem in Abdeckstellung liegenden Verkleidungsteil an jeder Querseite, wobei das Schwenkgestänge für das Verkleidungsteil zwei Niederhalter für das Dachgestänge aufweist,
- Fig. 2: einen an der vertikalen Längsmittelebene abgebrochenen Ausschnitt des Fahrzeugs nach Fig. 1 nach Verschwenken des Verkleidungsteils um eine Fahrzeugquerachse in eine hochkant stehende Zwischenstellung,
- Fig. 3: eine ähnliche Ansicht wie Fig. 2 während des Einschwenkens des Verkleidungsteils aus der Zwischenstellung in die Freigabestellung und gleichzeitigen Lösens der Niederhalter vom Dachgestänge,
- Fig. 4: eine ähnliche Ansicht wie Fig. 3 bei weiter fortschreitendem Einschwenken,
- Fig. 5: eine ähnliche Ansicht wie Fig. 4 bei nahezu in Freigabestellung verschwenktem Verkleidungsteil und aus der Bewegungsbahn des Dachgestänges verlagerten Niederhaltern,

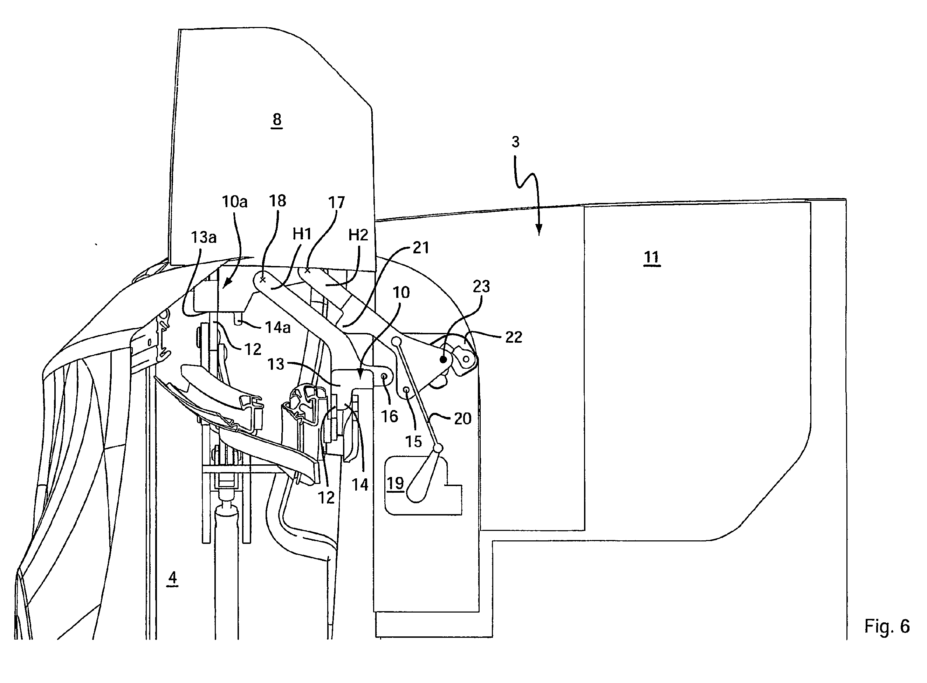

- Fig. 6: eine Ansicht von hinten auf Verkleidungsteil und Niederhalter in über ein Zapfenschloß verriegelter Stellung nach Fig. 2,

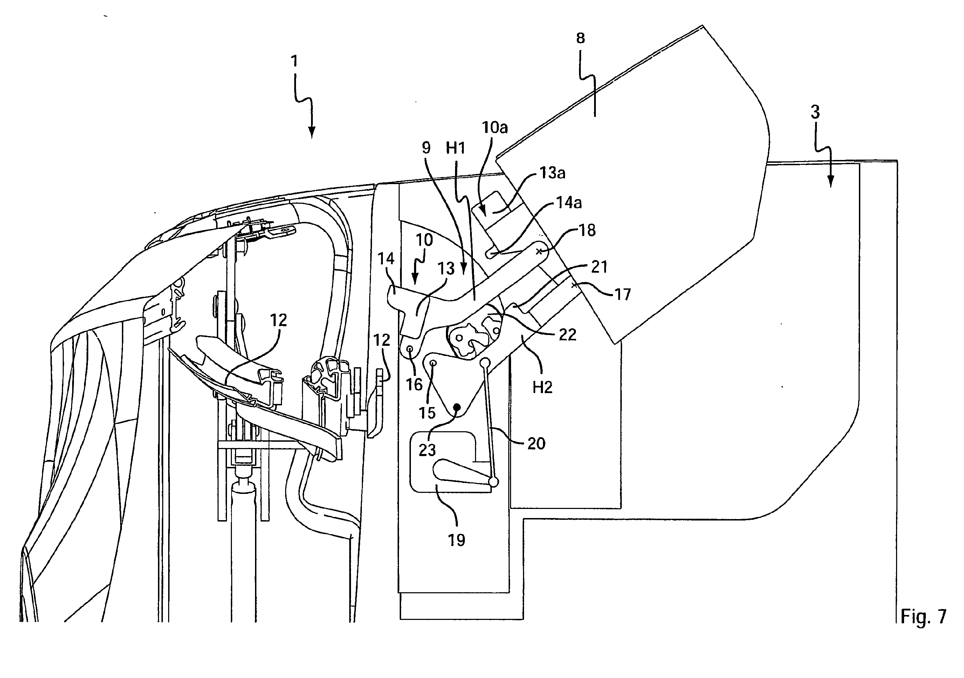

- Fig. 7: eine ähnliche Ansicht wie Fig. 6 in Stellung des Niederhalters nach Fig. 4,

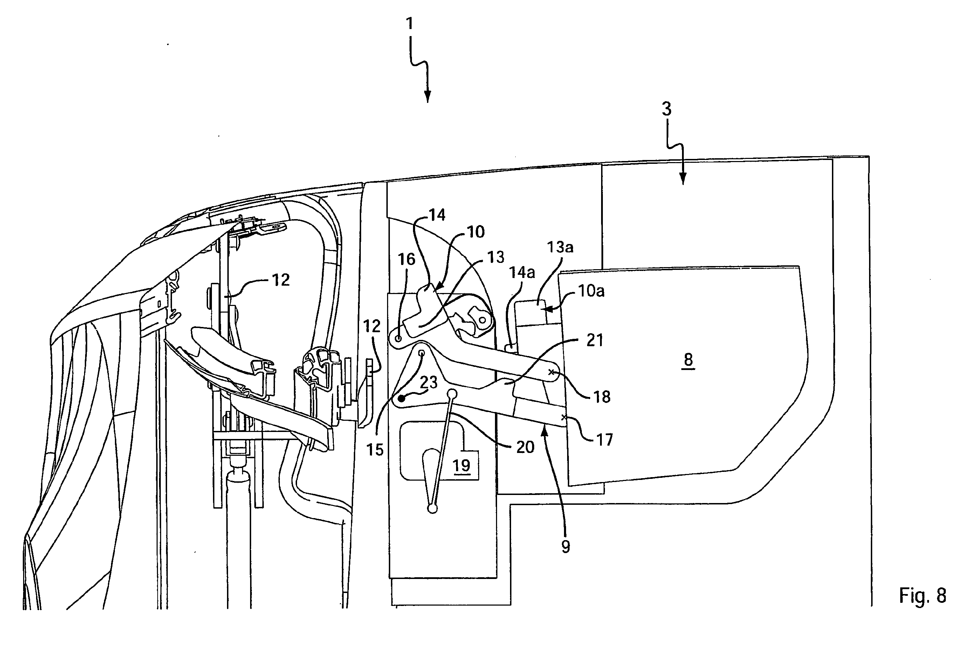

- Fig. 8: eine ähnliche Ansicht wie Fig. 7 in vollständig eingeschwenkter Stellung des Niederhalters ähnlich der nach Fig. 5.

Das erfindungsgemäße Cabriolet-Fahrzeug 1 kann sowohl ein mit einer Rückbank versehenes vier- oder fünfsitziges Fahrzeug als auch ein Zweisitzer sein.

Wie oben bereits erwähnt, kann das bewegliche und in geschlossener Stellung mittelbar oder unmittelbar an einen Windschutzscheibenrahmen anschließende Dach beispielsweise ein sog. Retractable Hardtop mit festen Dachteilen oder ein klassisches Softtop bilden.

In jedem Fall sind in den Querrandbereichen des Fahrzeugs 1 seitliche, längs zur Fahrtrichtung F liegende Dachgestängeteile 12 des Daches 2 vorgesehen, die teilweise das Dach 2 mit in der Karosserie 4 angeordneten Hauptlagern verbinden und teilweise mehrere Dachteile nach Art von seitlichen Rahmenteilen aneinander halten. Zu seiner Öffnung ist das Dach 2 im hinteren Fahrzeugbereich ablegbar, wofür eine Eintrittsöffnung 3 in die Karosserie 4 vorgesehen ist, die das Dach 2 während seiner Ablage vollständig oder zumindest im wesentlichen durchläuft.

Dabei kann das Dach 2 manuell oder voll- oder teilautomatisch zu bewegen sein.

Im vorliegenden Ausführungsbeispiel ist das Dach 2 über eine sog. Z-Faltung in der Karosserie 4 ablegbar, wobei das im geschlossenen Zustand mit einem Windschutzscheibenrahmen verbundene vordere Dachende 5 seine Orientierung im abgelegten Zustand beibehält, also mit der Außenseite 6 auch in abgelegter Stellung nach oben weist.

Dabei fallen die Querränder 7 des vorderen Dachendes 5 aufgrund der bombierten Dachform ab. Wenn der bezüglich der Fahrzeugquerrichtung mittlere Bereich des vorderen Dachendes 5 in etwa in der Ebene der Eintrittsöffnung 3 liegt, ragen daher die Querränder 7 weiter nach unten in die Karosserie 4. Bei geöffnetem Dach 2 kann somit dieses selbst mit seiner nach oben weisenden Seite 6 einen optischen Abschluß für einen wesentlichen Teil des mittleren Bereichs der Eintrittsöffnung 3 ausbilden. Ein übergreifender Deckel oder ähnliches ist dann hier entbehrlich. Aufgrund der abfallenden Querränder 7 ist außen hingegen eine gesonderte optische Abdeckung vorteilhaft, jedoch nicht zwingend.

Im gezeichneten Ausführungsbeispiel ist daher an jeder Seite ein bewegliches Verkleidungsteil 8 dargestellt, das an einem Gestänge 9 quer zum Fahrzeug und parallel zu einer den Insassenraum rückwärtig begrenzenden Rückwand 11 beweglich gehalten ist. Quer zum Fahrzeug bedeutet daher je nach Verlauf dieser Rückwand 11 nicht zwingend einen Winkel von 90° zur Fahrzeuglängsachse. Das Gestänge 9 dient gleichzeitig zur Bewegung von einem oder mehreren Niederhaltern 10, 10a, die bei geöffnetem Dach 2 jeweils über einen elastisch verformbaren und als Puffer wirkenden Druckkörper 13, 13a auf seitliche Dachgestängeteile 12 des abgelegten Daches 2 einwirken. Der Puffer 13, 13a ist abgewinkelt und umgreift mit einem Schenkel 14, 14a das Dachgestängeteil 12 so, daß dieses auch gegen Bewegung in Fahrzeugquerrichtung gesichert ist. Bei gleichzeitiger Ausbildung von zwei Niederhaltern 10, 10a, die hier nur beispielhaft dargestellt ist, können die Schenkel 14, 14a in Sicherungsstellung einander gegenüberliegen, um so einer Querbewegung des abgelegten Daches 2 zu jeder Seite entgegenzuwirken.

Das Gestänge 9 für die Niederhalter 10, 10a und das Verkleidungsteil 8 umfaßt hier ein Viergelenk 15, 16, 17, 18 für seine Ein- und Ausschwenkbewegung quer zum Fahrzeug 1. Auch ein Eingelenk ist alternativ möglich, insbesondere wenn eine große Fahrzeugbreite zur Verfügung steht.

Das Druckstück 13 ist an dem äußeren Hebel H1 des Viergelenkes 15, 16, 17, 18 angeordnet und dadurch von oben auf das oder die Dachgestängeteil(e) 12 aufschwenkbar. Im Ausführungsbeispiel liegen an beiden Fahrzeugseiten gleiche Verhältnisse vor; für eine reine Dachsicherung kann eventuell auch ein einseitiger Niederhalter 10, 10a ausreichen.

Da das Gestänge 9 bei der Auswärtsverlagerung des oder der Niederhalter(s) 10, 10a diesen mit einer Komponente in Fahrzeugquerrichtung verlagert, ist umgekehrt bei eingeschwenktem Niederhalter 10, 10a der seitliche Durchtrittsraum für die Dachgestängeteile 12 frei. Es müssen daher keinerlei Anpassungen an dem Dach 2 vorgenommen werden, die erfindungsgemäße Ausbildung kann auch bei bestehenden Cabriolet-Fahrzeugen nachgerüstet werden.

Für die Bewegung des Niederhalters 10, 10a kann ein eigener (Elektro-)Antrieb 19 vorgesehen sein, der beispielsweise über eine Zug-SchubStange 20 auf einen der Hebel H1, H2 einwirkt.

Um eine unbeabsichtigte Bewegung des Niederhalters 10, 10a aus seiner sichernden Stellung zu verhindern, kann der äußere Hebel H1 des Viergelenkes 15, 16, 17, 18 über einen Kraftvermittler 21 von dem inneren Hebel H2 niedergehalten werden, wodurch sich das Viergelenk auch dann sichert, wenn der Antrieb 19 dem näher an der Längsmittelebene angeordneten inneren Hebel H2 des Viergelenkes zugeordnet ist. Der Kraftvermittler 21 kann einfach als Anformung an dem inneren Hebel H2 ausgebildet sein, die in Zwischen- oder Abdeckstellung auf den äußeren Hebel H1 aufdrückt. Eine aufwärts gerichtete Kraft auf den oder die Niederhalter 10, 10a kann dann über den blockierten Antrieb 19 aufgefangen werden. Als zusätzliche Sicherung, die auch einen Antrieb 19 im Leerlauf ermöglicht, ist ein Zapfenschloß 22 vorgesehen, in das ein mitbewegter Achsstummel 23 eines Hebels H1, H2 in Sicherungsstellung eingreift.

Der Aufwand für Antrieb 19 und Gestänge 9 ist hier dadurch minimiert, daß diese in Doppelfunktion auch die Verkleidungsteile 8 bewegen und tragen.

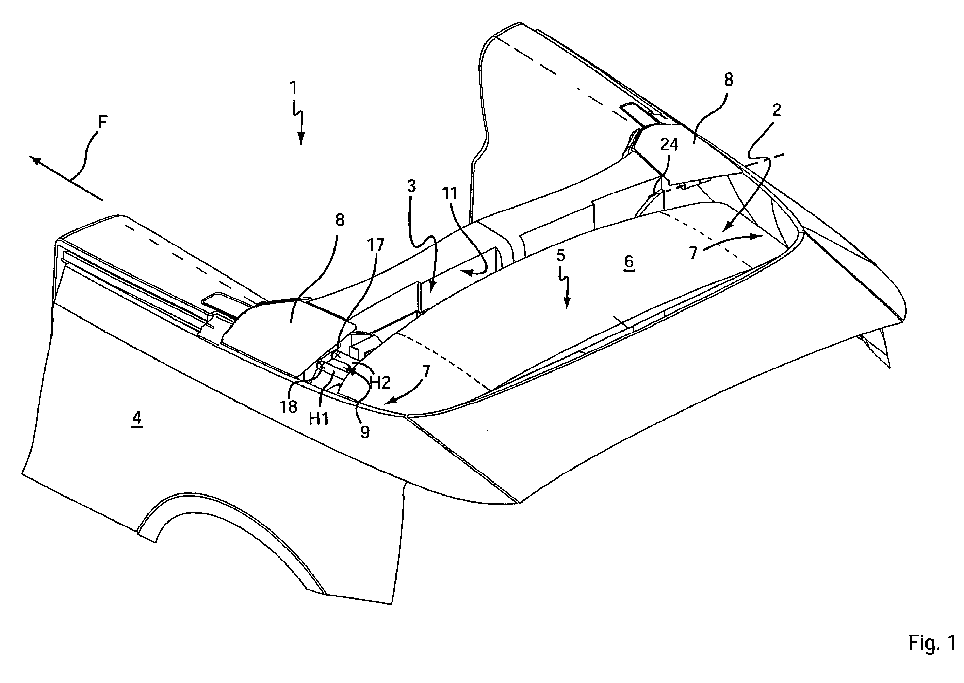

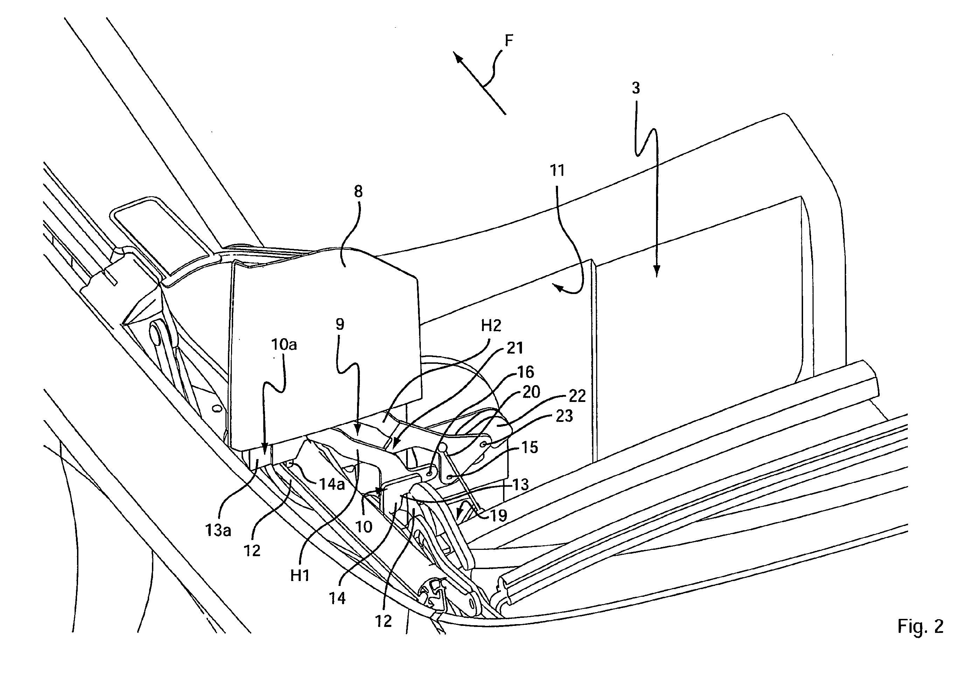

Aus der abdeckenden, im wesentlichen horizontalen Stellung nach Fig. 1 ist das Verkleidungsteil 8 um eine quer zum Fahrzeug 1 gelegene Achse 24 in eine hochkant liegende Zwischenstellung aufwärts verschwenkbar (Fig.2).

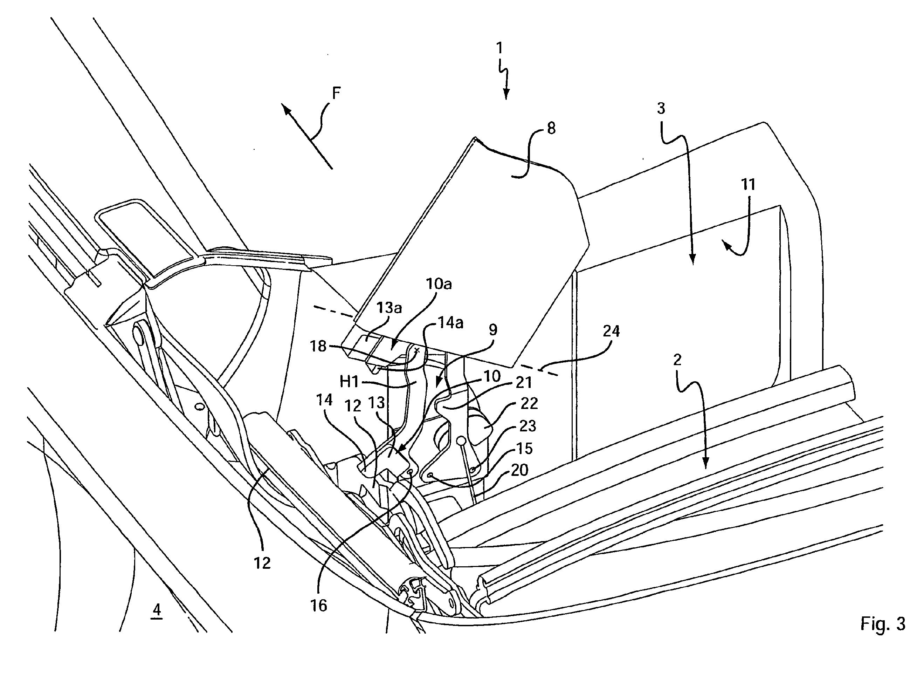

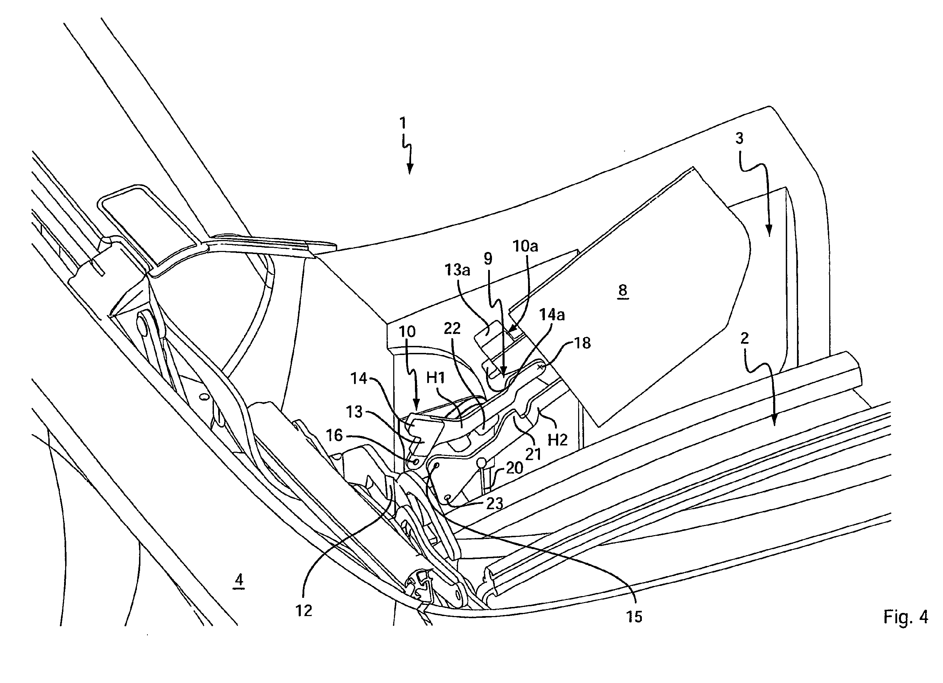

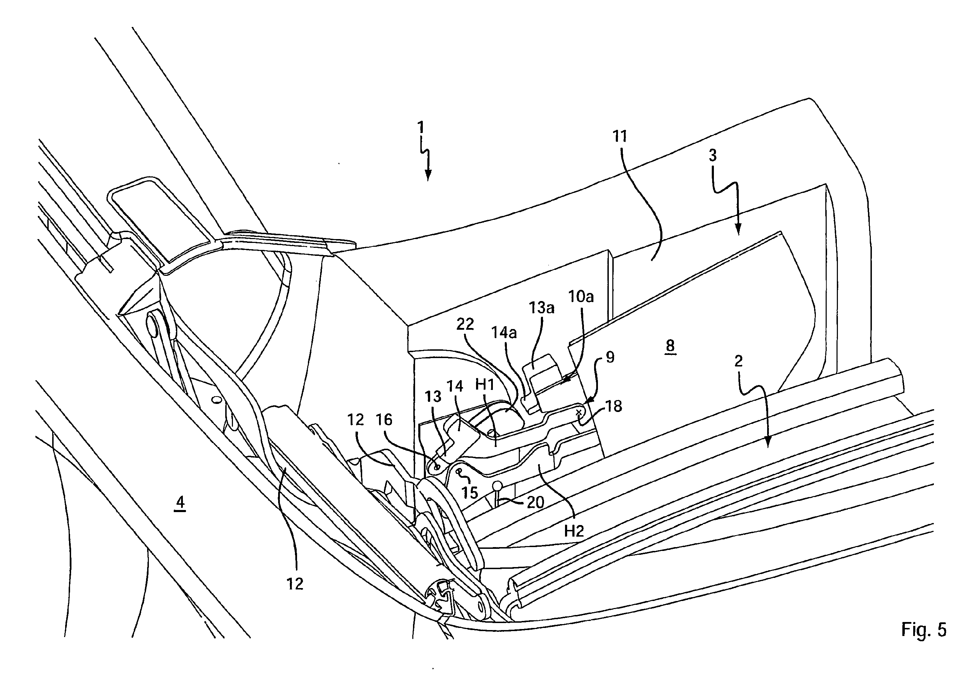

Diese Zwischenstellung ermöglicht das nachfolgende Einwärtsverschwenken über das auch den Niederhalter 10, 10a bewegende Viergelenk 15, 16, 17, 18 (Fig. 3, Fig. 4), um die in Fig. 5 gezeigte Freigabestellung des Verkleidungsteils 8 und des Niederhalters 10, 10a zu erreichen. Auch eine überlagerte translatorische und rotatorische Bewegung ist je nach Orientierung der Verkleidungsteile 8 in Freigabestellung (hier zur Mitte hin weisend) möglich.

Der Antrieb 19 kann über eine entsprechende Kraftumlenkung auch das Schwenken des Verkleidungsteils 8 um die Achse 24 mit bewirken; hierfür kann alternativ auch ein zweiter Antrieb oder eine Zwangsbewegung mit Federkraftunterstützung vorgesehen sein. Die Schwenkachse 24 ist vorteilhaft gemeinsam mit dem Verkleidungsteil 8 ein- und auswärts verschwenkbar, ebenso wie der Niederhalter 10, 10a mit dieser Querverlagerung zwangsweise mitbewegt ist.

Der Niederhalter 10, 10a sichert die seitlichen Dachgestängeteile 12 sowohl in Zwischenstellung als auch in Abdeckstellung des Verkleidungsteils 8 und ist somit unabhängig vom weiteren Verschwenken um die Achse 24.

Anders als in den Ausführungsbeispielen gezeigt, können die Verkleidungsteile 8 von der Zwischenstellung aus auch nach hinten schwenken und dann einen weiter heckwärts gelegenen Bereich abdekken. Der Niederhalter 10, 10a muß hierfür nicht verändert werden.

## Patentansprüche

1. Cabriolet-Fahrzeug (1) mit einem seitliche Dachgestängeteile (12) aufweisenden und im hinteren Fahrzeugbereich ablegbaren Dach (2), wobei
der Fahrzeugkarosserie (4) zumindest ein auf die Dachgestängeteile (12) des abgelegten Daches (2) einwirkender Niederhalter (10;10a) zugeordnet ist, **dadurch gekennzeichnet, daß** der Niederhalter an einem Gestänge (9) gehalten ist, über das er zur Bewirkung seiner Funktionsstellung mit einer Komponente in Fahrzeugquerrichtung auswärts verlagerbar ist.

2. Cabriolet-Fahrzeug (1) nach Anspruch 1,
**dadurch gekennzeichnet,**
**daß** zwei auf die Gestängeteile einwirkende Niederhalter (10;10a) an einer Fahrzeugseite vorgesehen sind.

3. Cabriolet-Fahrzeug (1) nach einem der Ansprüche 1 oder 2,
**dadurch gekennzeichnet,**
**daß** der Niederhalter (10;10a) ein auf die Dachgestängeteile (12) von oben aufschwenkbares Druckstück (13;13a) umfaßt.

4. Cabriolet-Fahrzeug (1) nach einem der Ansprüche 1 bis 3,
**dadurch gekennzeichnet,**
**daß** das Gestänge (9) ein Viergelenk (15;16;17;18) umfaßt.

5. Cabriolet-Fahrzeug (1) nach einem der Ansprüche 3 oder 4,
**dadurch gekennzeichnet,**
**daß** die ausgeschwenkte Stellung des Gestänges (9) über ein Schloß (22) gesichert ist.

6. Cabriolet-Fahrzeug (1) nach einem der Ansprüche 1 bis 5,
**dadurch gekennzeichnet,**
**daß** das Gestänge (9) in Doppelfunktion ein Verkleidungsteil (8) zum Abdecken oder Freigeben eines Teils einer Eintrittsöffnung (3) des Daches (2) in die Karosserie (4) beweglich hält.

7. Cabriolet-Fahrzeug (1) nach Anspruch 6,
**dadurch gekennzeichnet,**
**daß** das Verkleidungsteil (8) über das Gestänge (9) an einer den Insassenraum begrenzenden Rückwand (11) derart gehalten ist, daß es in freigebender Stellung in einer gegenüber seiner abdeckenden Stellung zumindest teilweise in Richtung einer vertikalen Fahrzeuglängsmittelebene verlagerten, hochkant gestellten und quer zum Fahrzeug (1) erstreckten Lage unterhalb der Ebene der Eintrittsöffnung (3) gehalten und aus dieser Stellung in eine hochkant gestellte Zwischenstellung auswärts verschwenkbar ist.

8. Cabriolet-Fahrzeug (1) nach einem der Ansprüche 6 oder 7,
**dadurch gekennzeichnet,**
**daß** das Verkleidungsteil (8) zwischen der abdeckenden Stellung und der Zwischenstellung um eine quer zum Fahrzeug (1) liegende Achse (24) schwenkbar ist.

9. Cabriolet-Fahrzeug (1) nach einem der Ansprüche 1 bis 8,
**dadurch gekennzeichnet,**
**daß** bei geöffnetem Dach (2) das vordere, bei geschlossenem Dach (2) mit einem Windschutzscheibenrahmen verbundene Dachende (5) in gleicher Orientierung abgelegt ist und seine bei geschlossenem Dach nach oben weisende Seite (6) eine optische Abschlußfläche für einen wesentlichen Teil des mittleren Bereichs der Eintrittsöffnung (3) ausbildet.

## Claims

1. A convertible vehicle (1) with a roof (2), which roof (2) comprises lateral rod assembly parts (12) and can be stowed in the rear of the vehicle, wherein at least one hold-down element (10; 10a) acting on the rod assembly parts (12) of the stowed roof (2) is associated with the vehicle body (4), **characterised in that** the hold-down element is held on a rod assembly (9) allowing the hold-down element to be moved out with a component in the transverse vehicle direction to achieve its operative position.

2. The convertible vehicle (1) according to claim 1, **characterised in that** two hold-down elements (10; 10a) acting on the rod assembly parts are provided on one side of the vehicle.

3. The convertible vehicle (1) according to any one of claims 1 or 2, **characterised in that** the hold-down element (10; 10a) comprises a pressure piece (13; 13a) which can be pivoted onto the rod assembly parts (12) from above.

4. The convertible vehicle (1) according to any one of claims 1 to 3, **characterised in that** the rod assembly (9) comprises a four-bar linkage (15; 16; 17; 18).

5. The convertible vehicle (1) according to any one of claims 3 or 4, **characterised in that** the rod assembly (9) is secured in its outwardly pivoted position by a lock (22).

6. The convertible vehicle (1) according to any one of claims 1 to 5, **characterised in that** the rod assembly (9) double-functions to hold a covering element (8) in a displaceable manner so as to cover or expose part of an entrance opening (3) of the roof (2) into the body (4).

7. The convertible vehicle (1) according to claim 6, **characterised in that** the covering element (8) is held on a rear wall (11), which limits the passenger compartment, by the rod assembly (9) in such a manner that, in the exposing position, it is held in a position below the plane of the entrance opening (3), said position being at least partially displaced, with respect to the covering position of the covering element (8), in the direction of a vertical median longitudinal plane of the vehicle and said position being an upright position extending in a transverse direction of the vehicle (1), from which the covering element (8) can be pivoted out into an upright intermediate position.

8. The convertible vehicle (1) according to any one of claims 6 or 7, **characterised in that** the covering element (8) can be pivoted between the covering position and the intermediate position about an axis (24) extending in a transverse direction of the vehicle (1).

9. The convertible vehicle (1) according to any one of claims 1 to 8, **characterised in that**, when the roof (2) is opened, the front roof end (5), which is connected to a windscreen frame when the roof (2) is closed, maintains the same orientation when stowed and its side (6) facing up when the roof is closed forms a visual end face for a substantial part of the central area of the entrance opening (3).

## Revendications

1. Véhicule cabriolet (1) avec un toit (2), ledit toit (2) comprenant des éléments de tringlerie latéraux (12) et pouvant être rangé à l'arrière dudit véhicule, dans lequel véhicule cabriolet (1) au moins un serre-flan (10; 10a) agissant sur les éléments de tringlerie (12) du toit (2) rangé est associé à la carrosserie (4), **caractérisé en ce que** le serre-flan est supporté sur une tringlerie (9) permettant le déplacement dudit serre-flan vers l'extérieur avec une composante dans la direction transversale du véhicule pour atteindre sa position effective.

2. Véhicule cabriolet (1) selon la revendication 1, **caractérisé en ce que** l'on prévoit d'un côté du véhicule deux serre-flans (10; 10a) agissant sur les éléments de tringlerie.

3. Véhicule cabriolet (1) selon l'une quelconque des revendications 1 ou 2, **caractérisé en ce que** le serre-flan (10; 10a) comprend une pièce de pression (13; 13a) que l'on peut pivoter sur les éléments de tringlerie (12) de haut.

4. Véhicule cabriolet (1) selon l'une quelconque des revendications 1 à 3, **caractérisé en ce que** la tringlerie (9) comprend un ensemble à quatre articulations (15; 16; 17; 18).

5. Véhicule cabriolet (1) selon l'une quelconque des revendications 3 ou 4, **caractérisé en ce que** la tringlerie (9) est retenue, dans sa position pivotée vers l'extérieur, par une serrure (22).

6. Véhicule cabriolet (1) selon l'une quelconque des revendications 1 à 5, **caractérisé en ce qu'**en double fonction, la tringlerie (9) supporte un élément de recouvrement (8) de manière déplaçable afin de recouvrir ou de libérer partiellement une ouverture d'entrée (3) du toit (2) à la carrosserie (4).

7. Véhicule cabriolet (1) selon la revendication 6, **caractérisé en ce que** l'élément de recouvrement (8) est retenu par la tringlerie (9) sur une paroi d'extrémité arrière (11) de l'habitacle de sorte qu'en position de libération, l'élément de recouvrement (8) est maintenu dans une position au-dessous du plan de l'ouverture d'entrée (3), cette position étant au moins partiellement déplacée par rapport à la position de recouvrement dudit élément de recouvrement (8) dans la direction d'un plan longitudinal médian vertical du véhicule et cette position étant une position debout s'étendant dans une direction transversale du véhicule (1), l'élément de recouvrement (8) pouvant être pivoté vers l'extérieur, à partir de ladite position, vers une position intermédiaire debout.

8. Véhicule cabriolet (1) selon l'une quelconque des revendications 6 ou 7, **caractérisé en ce que** l'élément de recouvrement (8) peut être pivoté entre la position de recouvrement et la position intermédiaire autour d'un axe (24) s'étendant dans une direction transversale du véhicule (1).

9. Véhicule cabriolet (1) selon l'une quelconque des revendications 1 à 8, **caractérisé en ce que**, lors de l'ouverture du toit (2), l'extrémité avant (5) du toit, qui est reliée à un cadre de pare-brise lorsque le toit (2) est fermé, est rangée maintenant la même orientation, et son côté (6) tourné vers le haut lorsque le toit est fermé constitue une face d'extrémité visuelle pour une grande partie de la surface centrale de l'ouverture d'entrée (3).
